# EUROPÄISCHE PATENTSCHRIFT

(11) **EP 1 346 005 B1**
(45) Veröffentlichungstag und Bekanntmachung des Hinweises auf die Patenterteilung: **12.01.2005**
(21) Anmeldenummer: 01991872.1
(22) Anmeldetag: 20.12.2001
(51) Int. Cl.: C09K 5/20, C23F 11/10, C23F 11/14

(54) **WÄSSRIGE KÜHLMITTEL FÜR DIE MOTORENEINLAUFPHASE ENTHALTEND DAMPFRAUMKORROSIONSINHIBITOREN**
AQUEOUS COOLANT FOR THE RUNNING-IN PHASE OF AN ENGINE CONTAINING WET CHAMBER CORROSION INHIBITORS
LIQUIDES DE REFROIDISSEMENT AQUEUX POUR LA PHASE DE RODAGE DE MOTEURS, CONTENANT DES INHIBITEURS DE CORROSION EN ZONE HUMIDE

(30) Priorität: 22.12.2000 DE 10064737
(43) Veröffentlichungstag der Anmeldung: 24.09.2003
(73) Patentinhaber: BASF AKTIENGESELLSCHAFT, 67056 Ludwigshafen (DE)
(72) Erfinder: WENDEROTH, Bernd, 69488 Birkenau (DE); MESZAROS, Ladislaus, 67112 Mutterstadt (DE); NITZSCHKE, Uwe, 67071 Ludwigshafen (DE); BERGEMANN, Marco, 68766 Hockenheim (DE)
(74) Vertreter: Huhn, Michael, Dr.
(86) Internationale Anmeldenummer: PCT/EP2001/015149
(87) Internationale Veröffentlichungsnummer: WO 2002/051957

(56) Entgegenhaltungen:
- EP-A- 0 739 965
- EP-A- 0 816 467
- DE-A- 19 846 434

## Beschreibung

Die vorliegende Erfindung betrifft ein wässriges Kühlmittel für die Motorspülstreckenkonservierung, das gute Dampfraumkorrosionsinhibitoreigenschaften durch den Zusatz von Ammoniumsalzen von gegebenenfalls OH-substituierten C₁-C₄-Mono- und/oder Dicarbonsäuren aufweist. Die erfindungsgemäßen Kühlmittel werden während der Einlaufphase neu gebauter Motoren eingesetzt.

Neu gebaute Motoren werden generell nach dem Zusammenbau kurzen Probeund Testläufen unterzogen. Die dabei benutzten Kühlmittel sind solche auf Ölbasis oder auf Basis von Monoethylenglykol oder Monopropylenglykol. Häufig wird aus Kostengründen auf die üblichen, in Kraftfahrzeugen verwendeten Kühlmittelkonzentrate zurückgegriffen, die dann noch weiter verdünnt werden.

Nach erfolgreicher Einlaufphase wird dann das Kühlmittel abgelassen und der Motor bis zum endgültigen Einbau in das Fahrzeug zwischengelagert. Dabei treten häufig Korrosionsprobleme auf, da die sogenannte Motorspülstrecke, also die Kühlkanäle, immer noch Reste des Kühlmittels enthält. Durch Verdampfen entsteht dann innerhalb der Motorspülstrecke eine Atmosphäre mit einer erhöhten Feuchtigkeit. Diese Feuchtigkeit kann nicht oder nur sehr langsam entweichen. Solche Atmosphären sind stark korrosionsfördernd, wodurch während der erwähnten Lagerung der Motoren vielfach Korrosion in unterschiedlichem Grad und teilweise in verschiedenen Arten beobachtet werden kann.

Insbesondere in modernen Verbrennungsmotoren werden Temperaturbelastungen erreicht, die hohe Anforderungen an die verwendeten Materialien stellen. Jede Art und jegliches Ausmaß von Korrosion stellen dabei einen potentiellen Risikofaktor dar und können zur Verkürzungen der Laufzeit des Motors und zur Erniedrigung der Zuverlässigkeit führen. Weiterhin werden in modernen Motoren zunehmend eine Vielzahl von unterschiedlichen Materialien verwendet, beispielsweise Kupfer, Messing, Weichlot, Stahl sowie Magnesium- und Aluminiumlegierungen. Durch diese Vielzahl an metallischen Materialien entstehen zusätzlich potentielle Korrosionsprobleme, insbesondere an den Stellen, an denen verschiedene Metalle in Kontakt zueinander stehen.

Ein weiteres Problem besteht darin, daß die in der Spülstrecke verbleibenden Rückstände im Fall der Verwendung von Kühlerschutzmitteln auf Ölbasis häufig nicht mit den später einzufüllenden regulären Kühlmitteln mischbar sind. Außerdem ergibt sich eine erschwerte umweltgerechte Entsorgung.

Es besteht daher ein Bedarf an Kühlmitteln, mit denen eine effektive Konservierung der Motorspülstrecke bei Motoren nach dem Ablassen des Kühlmittels nach erfolgter Einlaufphase ermöglicht wird. Voraussetzung dafür ist ein sehr guter Korrosionsschutz des Dampfraums. Diese Kühlmittel sollen weiterhin mit den regulären Kühlmitteln kompatibel und umweltgerecht zu entsorgen sein.

Im Stand der Technik finden sich Referenzen, die allgemein Dampfraumkorrosionsinhibitoren beschreiben.

Die DE 184 725 offenbart die Verwendung von Nitriten der Alkali- und Erdalkalimetallmetalle in Kombination mit Phosphaten sekundärer Amine in korrosionsverhindemdem Verpackungsmaterial.

Von E.G. Stroud und W.H.J. Vemon wird in J.Appl.Chem. 2, 1952, Seite 166 bis 172 die Verwendung von Natriumbenzoat in Verpackungsmaterialien als Korrosionsinhibitor beschrieben.

Die DD-P-14 440 offenbart ein korrosionsschützendes Verpackungsmittel, bei dem Ammoniumnitrite zusammen mit kationenaktiven Netzmitteln aufgebracht wurden.

DE-AS-2 141 393 beschreibt ein korrosionsverhinderndes Verpackungsmaterial, das ein Papiermaterial mit einer bestimmten Faserlänge aufweist, als Inhibitor werden öllösliche Produkte der erdölchemischen Synthese verwendet, vorzugsweise Salze der Benzoesäure.

In der US 4,124,549 findet sich die Beschreibung der Verwendung von Salzen bestimmter Carbonsäuren, darunter Benzoesäure, mit organischen Aminen als Dampfraumkorrosionsinhibitor. Die Salze werden in ein thermoplastisches Harz eingearbeitet, das nach Extrusion als Verpackungsmaterial verwendet wird.

Alle oben genannten Referenzen offenbaren Dampfraumkorrosionsinhibitoren, die in/oder auf Verpackungsmaterialien angebracht werden.

Andere Referenzen offenbaren Korrosionsinhibitoren mit Dampfraumkorrosionsschutzwirkung, die allgemein zur Korrosionsverhinderung in metallischen Innenräumen verwendet werden können.

In der DD-P-298 662 ist dies z.B. eine Mischung bestehend aus 2,1 bis 250 g/l Ammoniumbenzoat, 0,5 bis 60 g/l p-Hydroxybenzoesäureester, 1 bis 120 g/l Benzotriazol und 0,4 bis 50 g/l Dimethylaminoethanol, in der EP-A-221 212 wird eine dampfraumkorrosionshemmende, wässrige Mischung, enthaltend ein Alkylenglykol, gegebenenfalls ein Polyoxyalkylenglykol und als Korrosionsinhibitor ein Polyoxyalkylenamin mit einem bestimmten Gewichtsverhältnis von Oxyethylen zu Oxypropylen vorgeschlagen.

Häufig werden Benzoate in Kombination mit anderen Substanzen in Dampfraumkorrosion verhindernden Mischungen verwendet, auch die Verwendung von Benzoaten in Kühlflüssigkeiten von Verbrennungsmotoren ist seit langem bekannt. Diese Flüssigkeiten sind generell so formuliert, daß sie zur Verhinderung von Korrosion im Flüssigkeitsraum verwendet werden.

So beschreibt die WO 97/30133 korrosionsinhibierende Mischungen für den Einsatz als Kühlmittel in Verbrennungsmotoren, die als wirksamen Inhaltsstoff quaternierte Imidazole enthalten. Als weitere Komponenten, die vorhanden sein können, werden u.a. die Natriumsalze von Benzoesäure erwähnt. Diese Mischungen dienen zur Verhinderung von Korrosion, die im Flüssigkeitsraum der Kühlkanäle von Verbrennungsmotoren auftreten kann.

Korrosionsinhibierende Mischungen, die ebenfalls zur Verhinderung von Korrosion im Flüssigkeitsraum der Kühlkanäle von Verbrennungsmotoren eingesetzt werden, sind auch in der EP-A-816 467 offenbart. Die dort beschriebenen Mischungen enthalten 0,5 bis 10 Gewichtsprozent einer Carbonsäure mit 3 bis 16 C-Atomen in Form von deren Akalimetall-, Ammonium- oder substituierten Ammoniumsalzen und 0,01 bis 3 Gewichtsprozent mindestens eines Kohlenwasserstofftriazols und/oder Kohlenwasserstoffthiazols, insbesondere Benzotriazol und/oder Tolutriazol. Als Carbonsäure kann u.a. Benzoesäure verwendet werden. Die Mischungen, die als Gefrierschutzmittelkonzentrate vorliegen, sind silikat-, borat- und nitratfrei.

Schließlich beschreibt die US 4,711,735 eine komplexe Mischung zur Verhinderung von Korrosion und Ablagerungen in Kühlsystemen von Verbrennungsmotoren. Diese Mischung enthält 0,017 bis 0,42 % Rizinolsäure, 0,007 bis 0,083 % Benzotriazol, 0,5 bis 1,5% Mercaptobenzothiazol, 0,17 bis 4% Styrolmaleinsäureanhydrid eines Molekulargewichts von 200 bis 3500, 0,42 bis 2% Benzoesäure, 0,42 bis 4,0% eines Salzes der Benzoesäure, 0,33 bis 3,3% Nitrit, 0,37 bis 3,7% Nitrat und 0,42 bis 3% Carboxymethylmercaptobemsteinsäure. Die Korrosion im Flüssigkeitsraum soll damit verhindert werden, wobei auch erwähnt wird, daß ein die Dampfraumkorrosion inhibierender Effekt auftreten kann.

In WO 00/22190 werden wässrige Motoreinlaufmittel mit Dampfraumkorrosionsschutz beschrieben, die eines oder mehrere Ammoniumsalze von Carbonsäuren enthalten, die 5 bis 18 C-Atome und besonders bevorzugt 6 bis 12 C-Atome aufweisen.

Es besteht weiterhin ein Bedarf an Kühlmitteln, die einen effektiven Dampfraumkorrosionsschutz bieten und die Nachteile der im Stand der Technik beschriebenen Kühlmittel nicht aufweisen.

Die Aufgabe der vorliegenden Erfindung liegt darin, ein wässriges Kühlmittel für Verbrennungsmotoren bereitzustellen, das eine effektive Dampfraumkorrosionsinhibierung ermöglicht in Motorspülstrecken, aus denen das Kühlmittel entfernt wurde und die anschließend gelagert werden. Dieses Kühlmittel soll neben einer ausreichenden Korrosionsinhibitoraktivität kostengünstig, lediglich durch geringe Manipulationen an handelsüblichen Kühlflüssigkeiten bzw. Kühlmittelkonzentraten für Verbrennungsmotoren erhältlich und umweltgerecht zu entsorgen sein.

Diese Aufgabe wird gelöst durch die Verwendung von Ammoniumsalzen von C₁-C₄-Mono- und Dicarbonsäuren, die gegebenenfalls einen oder mehrere OH-Substituenten aufweisen können, als Dampfraumkorrosionsinhibitor in wässrigen Kühlmitteln bei der Einlaufphase von Verbrennungsmotoren, bei denen das Kühlmittel nach der Einlaufphase aus dem Kühlkreislauf des Motors abgelassen wird.

Diese Aufgabe wird weiterhin gelöst durch ein wässriges Kühlmittel mit dampfraumkorrosionsinhibierenden Eigenschaften für die Einlaufphase von Verbrennungsmotoren, nach der das Kühlmittel abgelassen wird, enthaltend mindestens ein Ammoniumsalz einer C₁-C₄-Mono- oder Dicarbonsäure, die gegebenenfalls einen oder mehrere OH-Substituenten aufweist, neben den üblichen Begleit- und Hilfsstoffen.

Es wurde gefunden, daß durch den Zusatz der Ammoniumsalze der vorstehend definierten kurzkettigen Säuren zu Kühlmitteln eine äußerst effektive Konservierung der Motorspülstrecke und somit ein Verhindern von Dampfraumkorrosion erreicht werden kann. Dieser Effekt der Konservierung tritt dann ein, wenn das Kühlmittel aus dem Kühlkreislauf abgelassen wird, etwa nach der Einlaufphase, und der Motor anschließend gelagert wird. Der erzielte Dampfraumkorrosionsschutz ist häufig demjenigen überlegen, der mit den beispielsweise in der WO 00/22190 verwendeten Ammoniumsalzen längerkettiger Fettsäuren erzielt wird.

Erfindungsgemäß können Ammoniumsalze von unsubstituierten oder von OH-substituierten C₁-C₄-Mono- und Dicarbonsäuren, die jeweils linear oder verzweigt sein können, verwendet werden. Es können ein oder mehrere Substituenten vorhanden sein. Beispiele für geeignete, erfindungsgemäß einsetzbare Mono- oder Dicarbonsäuren sind Ameisensäure, Essigsäure, Propionsäure, Buttersäure, Oxalsäure, Malonsäure, Bernsteinsäure und Milchsäure.

Dabei kann nur eine bestimmte C₁-C₄-Mono- oder Dicarbonsäure oder ein Gemisch von zwei oder mehr dieser genannten Säuren, jeweils in Form des Ammoniumsalzes, eingesetzt werden.

Als Ammoniumkationen können Kationen des Typs NH₄⁺, Monoalkylammonium, Dialkylammonium und Trialkylammonium verwendet werden. Wenn die Ammoniumkationen Alkylreste aufweisen, so können diese linear oder verzweigt, cyclisch oder acyclisch sein. Sie weisen vorzugsweise eine Kohlenstoffzahl von 1 bis 6 auf. Die Alkylreste können unsubstituiert sein oder einen oder mehrere OH-Substituenten aufweisen.

Beispiele für an dem Ammoniumkation vorhandene Alkylreste sind Methyl, Ethyl, Propyl, Butyl, i-Propyl, tert.-Butyl, Pentyl, Cyclohexyl und Hydroxyethyl.

Bevorzugte Ammoniumkationen sind NH₄⁺, Mono-, Di- und Triethylammonium, Mono-, Di- und Triethanolammonium.

Insbesondere sind NH₄⁺ und Ethanolammoniumkationen, wie beispielsweise das Triethanolammoniumkation, bevorzugt.

Die erfindungsgemäßen Salze liegen in dem wässrigen Kühlmittel, das in die Kühlkanäle des Motors eingefüllt wird, in Konzentrationen von ≤ 10 Gew.-%, vorzugsweise 0,1 bis 5 Gew.-% vor. Ein besonders bevorzugter Konzentrationsbereich liegt bei Werten von 0,1 bis 1 Gew.-%. Die verwendeten Kühlmittel können die üblichen, einem Fachmann bekannten Begleit- und Hilfsstoffe enthalten. Dies sind beispielsweise Monoethylenglykol, Monopropylenglykol, Glycerin, höherkettige Mono- und Dicarbonsäuren und deren Alkalisalze, Triazolderivate, Imidazolderivate, Silikate, Nitrite, Nitrate, Phosphate, Alkalihydroxide, Thiazolderivate, Pyrrolidonderivate, Polyacrylate, Salze von Erdalkalimetallen, Molybdate, Wolframate, Phosphonate und Borate.

Die erfindungsgemäßen Kühlmittel mit Dampfraumkorrosionsinhibitorwirkung werden am einfachsten aus den gängigen, kommerziell erhältlichen Kühlmitteln durch entsprechendes Verdünnen und Zufügen des erfindungsgemäßen Salzes hergestellt. Die erfindungsgemäßen Kühlmittel enthalten Wasser in einem Anteil von 80 bis 98 Gewichtsprozent, vorzugsweise 90 bis 95 Gewichtsprozent.

Durch einfachen Zusatz der erfindungsgemäßen Salze lassen sich Kühlmittel mit einer ausgeprägten Dampfraumkorrosionsinhibitorwirkung erhalten. Solche Kühlmittel lassen sich vorteilhafterweise während der Einlaufphase von Verbrennungsmotoren einsetzen, nach der das Kühlmittel aus dem Kühlkreislauf des Motors entfernt und die Motoren zwischengelagert werden.

Die Erfindung wird nun in den nachfolgenden Beispielen erläutert. Dabei wurden die verwendeten erfindungsgemäßen Kühlflüssigkeiten nach der folgenden Vorschrift hergestellt, wobei die in dem entsprechenden Beispiel angegebene Menge der jeweiligen Substanz verwendet wurde.

Etwa 4 Gew.-% destilliertes Wasser werden vorgelegt und anschließend unter Rühren mit 50%-iger NaOH- bzw. KOH-Lösung, Benztriazol, Tolutriazol sowie 4-Hydroxybenzoesäure, 2-Ethylhexansäure, Adipinsäure und/oder Sebacinsäure versetzt, wobei ein pH-Wert von ca. 7,5 erreicht wird. Dann werden nacheinander Monoethylenglykol und gegebenenfalls wässrige Polyvinylpyrrolidon-Lösung zugegeben. Bei den Beispielen A bis A10 wird bei einer Temperatur von unter 50°C mit einer Lösung von Natriummetasilikat X 5 H₂O und Natriumsilikophosphonat in Monoethylenglykol versetzt; anschließend wird (außer in Beispiel A) das Salz der jeweiligen Carbonsäure zugegeben. Zum Schluß wird unter Rühren mit der noch fehlenden Menge destilliertem Wasser verdünnt, wobei man eine klare, farblose Flüssigkeit erhält.

Die erfindungsgemäßen wässrigen Mischungen werden im nachfolgenden beschriebenen Dampfraumkorrosionstest getestet:

### Beispiele A bis A10 und B bis B2

### Dampfraumkorrosionstest

Pro Versuch werden drei aus Zylinderbüchsen geschnittene Streifen aus Grauguß mit einer Länge von 130 mm, einer Breite von 15-25 mm und einer Tiefe von 11mm (ca. Werte) benötigt. Nach dem Entgraten der äußersten Schnittkanten neuer Teststreifen mit einer Feile werden die Streifen mit einem mit Aceton befeuchteten Kleenextuch gereinigt, bis alle anhaftenden Verunreinigungen vollständig entfernt sind.

Drei Zylinderbüchsenstreifen werden senkrecht und jeweils über Kreuz zum nächsten Streifen in ein 1000 ml Becherglas (Fa. Schott, Duran, graduiert, niedrige Form mit Ausguß) gestellt und mit der zu prüfenden Testlösung, die zuvor zum Sieden erhitzt wurde, so übergossen, daß die Zylinderbüchsenstreifen vollständig mit der Testlösung bedeckt sind.
Das Becherglas wird mit einem Uhrglas abgedeckt und eine Stunde bei Raumtemperatur stehen gelassen. Danach wird die Testlösung bis zur 300 ml-Marke abgegossen und das Becherglas dampfdicht mit drei Lagen Parafilm ("M" Laboratory Film, American National Can, Chicago, II. 60631) verschlossen.

Die Zylinderbüchsenstreifen werden in dieser feuchten Atmosphäre 10 Tage bei Raumtemperatur gelagert. Nach dieser Zeit werden sie entnommen, sofort mit destilliertem Wasser und anschließend mit Aceton abgespült und getrocknet. Anschließend erfolgt die visuelle Beurteilung für die Bereiche Dampfraum, Flüssigkeit und für die Grenzfläche zwischen Dampfraum und Flüssigkeit.

Die Versuchsergebnisse sind in der Tabelle 2 aufgeführt. Während bei Verwendung nach Vergleichsbeispiel A im Dampfraum Korrosion an den Grauguß-Teststäben und bei Verwendung nach Vergleichsbeispiel B im Dampfraum, in der Flüssigkeit und an der Grenzfläche Korrosion auftrat, konnte die Korrosion durch den Einsatz der erfindungsgemäßen wässrigen Kühlmittel A 1 bis A 8 und B1 vollständig verhindert werden; mit den Ammoniumsalzen längerkettiger Carbonsäuren gemäß WO 00/22190 (Beispiele A 9, A 10 und B2) konnte im Gegensatz zu den erfindungsgemäßen Beispielen die Dampfraumkorrosion nicht ausreichend verhindert werden.

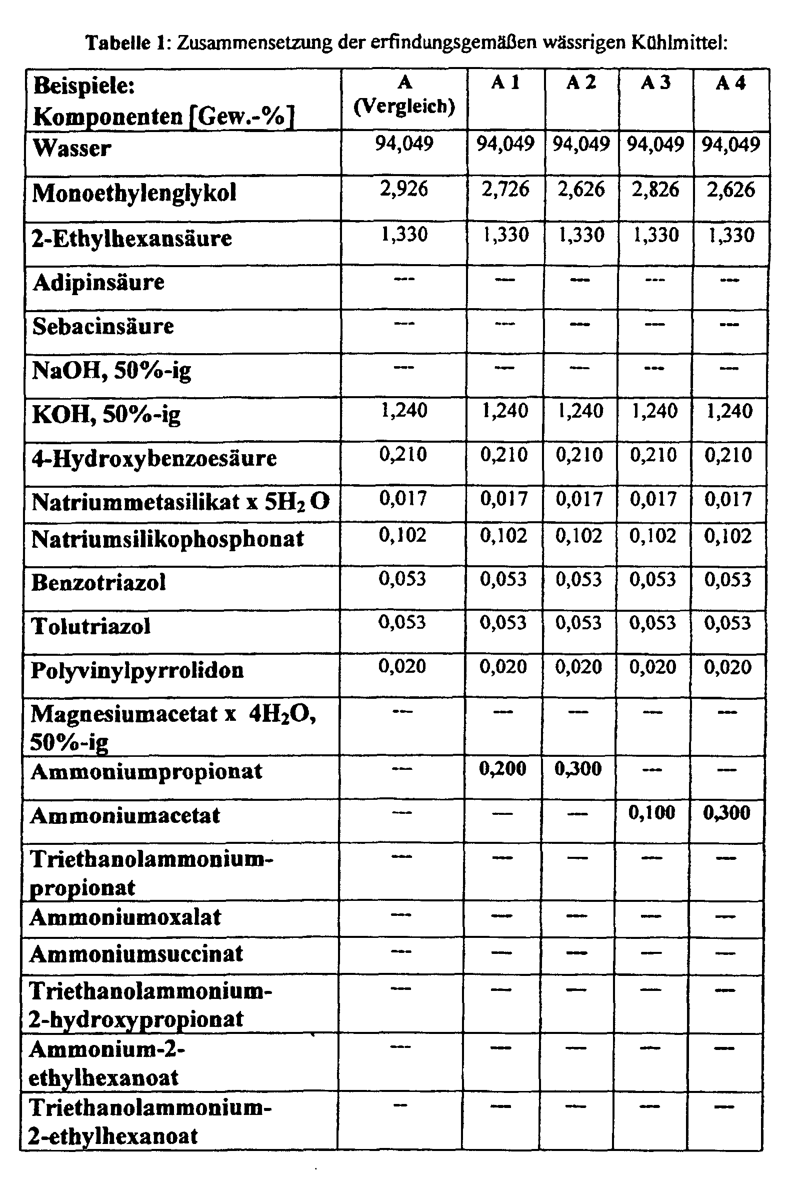

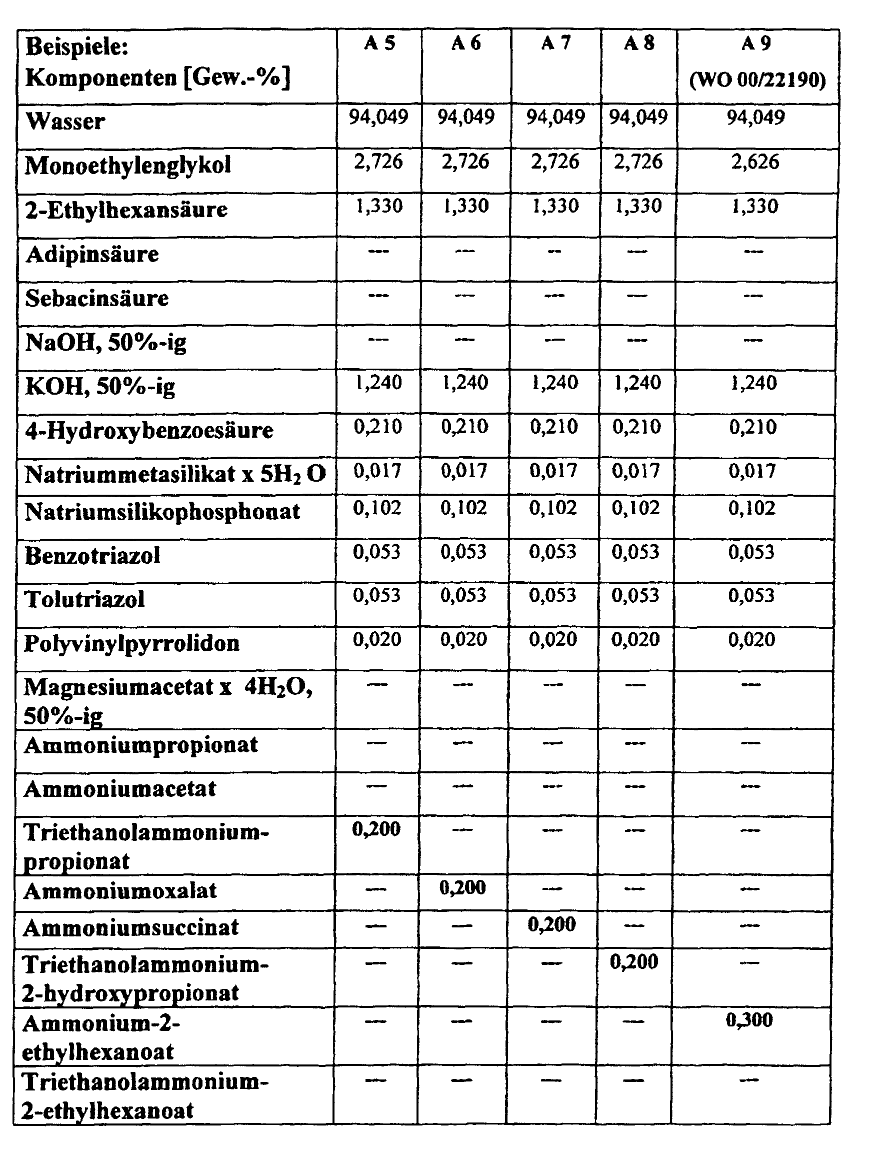

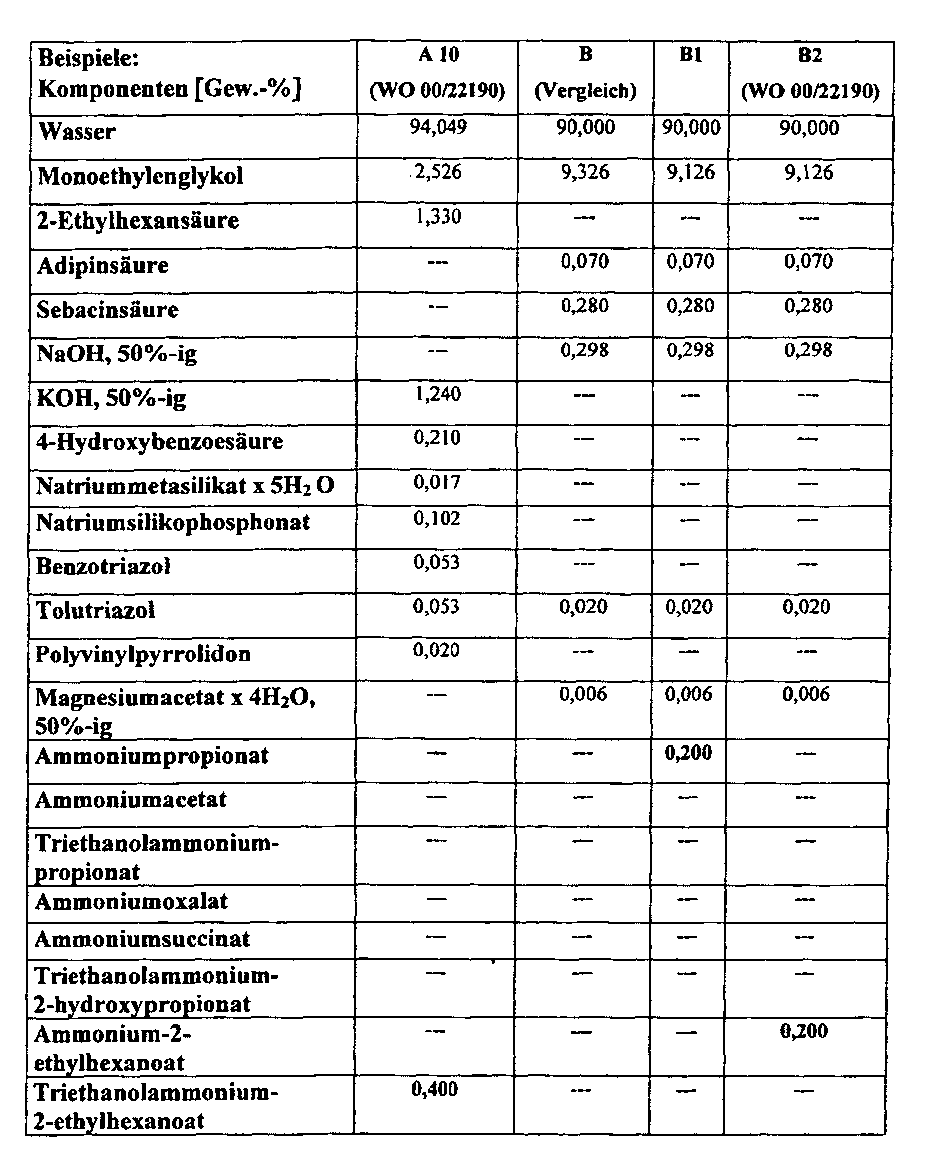

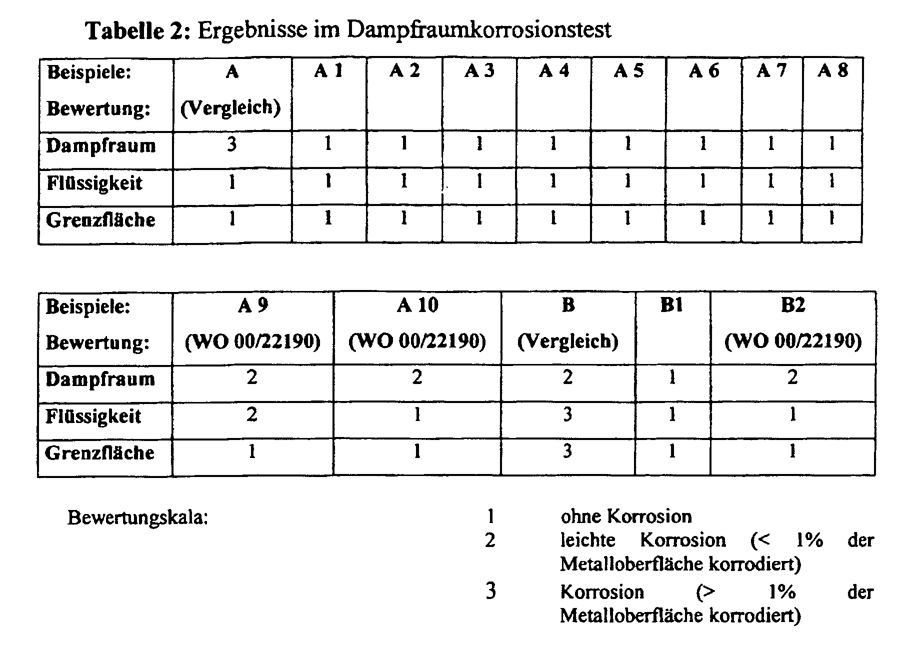

## Patentansprüche

1. Verwendung von Ammoniumsalzen von gegebenenfalls OH-substituierten C₁-C₄-Mono- und Dicarbonsäuren als Dampfraumkorrosionsinhibitor in wässrigen Kühlmitteln bei der Einlaufphase von Verbrennungsmotoren, bei denen das Kühlmittel nach erfolgter Einlaufphase aus dem Kühlkreislauf des Motors abgelassen wird.

2. Verwendung nach Anspruch 1, **dadurch gekennzeichnet, dass** das Salz der gegebenenfalls substituierten Mono- oder Dicarbonsäure in einer Menge von ≤ 10 Gew.-%, vorzugsweise 0,1 bis 5 Gew.-%, insbesondere 0,1 bis 1 Gew.-%, in dem Kühlmittel vorliegt.

3. Verwendung nach Anspruch 1 oder 2, **dadurch gekennzeichnet, dass** die Carbonsäure ausgesucht ist aus der Gruppe bestehend aus Ameisensäure, Essigsäure, Propionsäure, Buttersäure, Oxalsäure, Malonsäure, Bernsteinsäure und Milchsäure.

4. Verwendung nach einem der Ansprüche 1 bis 3, **dadurch gekennzeichnet, dass** das Ammoniumion ausgewählt ist aus der Gruppe bestehend aus NH₄⁺-Ionen und Monoalkyl-, Dialkyl- und Trialkylammonium-Ionen von gegebenenfalls OH-substituierten C₁-C₆-Alkylresten, vorzugsweise aus der Gruppe bestehend aus NH₄⁺-, Mono-, Di- und Triethylammonium-Ionen und Mono-, Di- und Triethanolammonium-Ionen, insbesondere NH₄⁺- und Triethanolammonium-Ionen.

5. Wässriges Kühlmittel mit die Dampfraumkorrosion inhibierenden Eigenschaften für die Einlaufphase von Verbrennungsmotoren, nach denen das Kühlmittel abgelassen wird, enthaltend mindestens ein Ammoniumsalz einer C₁-C₄-Mono- oder Dicarbonsäure, die gegebenenfalls einen oder mehrere OH-Substituenten aufweist, neben den üblichen Begleit- und Hilfsstoffen.

6. Wässriges Kühlmittel nach Anspruch 5, **dadurch gekennzeichnet, dass** das Salz der gegebenenfalls substituierten Mono- oder Dicarbonsäure in einer Menge von ≤ 10 Gew.-%, vorzugsweise 0,1 bis 5 Gew.-%, insbesondere 0,1 bis 1 Gew.-% in dem Kühlmittel vorliegt.

7. Wässriges Kühlmittel nach Anspruch 5 oder 6, **dadurch gekennzeichnet, dass** die Carbonsäure ausgewählt ist aus der Gruppe bestehend aus Ameisensäure, Essigsäure, Propionsäure, Buttersäure, Oxalsäure, Malonsäure, Bernsteinsäure und Milchsäure.

8. Wässriges Kühlmittel nach einem der Ansprüche 5 bis 7, **dadurch gekennzeichnet, dass** das Ammoniumion ausgewählt ist aus der Gruppe bestehend aus NH₄⁺-Ionen und Monoalkyl-, Dialkyl- und Trialkylammonium-Ionen von gegebenenfalls OH-substituierten C₁-C₆-Alkylresten, vorzugsweise aus der Gruppe bestehend aus NH₄⁺-, Mono-, Di- und Triethylammonium-Ionen und Mono-, Di- und Triethanotammonium-Ionen, insbesondere NH₄⁺- und Triethanolammonium-Ionen.

9. Wässriges Kühlmittel nach einem der Ansprüche 5 bis 8, **dadurch gekennzeichnet, dass** die verwendeten Begleit- und Hilfsstoffe aus der Gruppe ausgewählt sind, die besteht aus Monoethylenglykol, Monopropylenglykol, Glycerin, längerkettigen Mono- und Dicarbonsäuren und deren Alkalisalzen, Triazolderivaten, Imidazolderivaten, Silikaten, Nitriten, Nitraten, Phosphaten, Alkalihydroxiden, Thiazolderivaten, Pyrrolidonderivaten, Polyacrylaten, Salzen von Erdalkalimetallen, Molybdaten, Wolframaten, Phosphonaten und Boraten.

## Claims

1. The use of ammonium salts of unsubstituted or OH-substituted C₁-C₄-mono- and dicarboxylic acids as a vapor-space corrosion inhibitor in aqueous coolants during the run-in phase of internal combustion engines, in which the coolant is drained from the cooling circulation of the engine after the run-in phase is complete.

2. The use as claimed in claim 1, wherein the salt of the unsubstituted or substituted mono- or dicarboxylic acid is present in an amount of ≤ 10, preferably from 0.1 to 5, in particular from 0.1 to 1, % by weight in the coolant.

3. The use as claimed in claim 1 or 2, wherein the carboxylic acid is selected from the group consisting of formic acid, acetic acid, propionic acid, butyric acid, oxalic acid, malonic acid, succinic acid and lactic acid.

4. The use as claimed in any of claims 1 to 3, wherein the ammonium ion is selected from the group consisting of NH₄⁺ ions and monoalkyl-, dialkyl- and trialkylammonium ions of unsubstituted or OH-substituted C₁-C₆-alkyl radicals, preferably from the group consisting of NH₄⁺ and mono-, di- and triethylammonium ions and mono-, di- and triethanolammonium ions, in particular NH₄⁺ and triethanolammonium ions.

5. An aqueous coolant having vapor-space corrosion inhibiting properties for the run-in phase of internal combustion engines, after which the coolant is drained, comprising at least one ammonium salt of a C₁-C₄-mono- or dicarboxylic acid which may have one or more OH substituents, in addition to the conventional accompanying substances and assistants.

6. An aqueous coolant as claimed in claim 5, wherein the salt of the unsubstituted or substituted mono- or dicarboxylic acid is present in an amount of ≤ 10, preferably from 0.1 to 5, in particular from 0.1 to 1, % by weight in the coolant.

7. An aqueous coolant as claimed in claim 5 or 6, wherein the carboxylic acid is selected from the group consisting of formic acid, acetic acid, propionic acid, butyric acid, oxalic acid, malonic acid, succinic acid and lactic acid.

8. An aqueous coolant as claimed in any of claims 5 to 7, wherein the ammonium ion is selected from the group consisting of NH₄⁺ ions and monoalkyl-, dialkyl- and trialkylammonium ions of unsubstituted or OH-substituted C₁-C₆-alkyl radicals, preferably from the group consisting of NH₄⁺ and mono-, di- and triethylammonium ions and mono-, di- and triethanolammonium ions, in particular NH₄⁺ and triethanolammmonium ions.

9. An aqueous coolant as claimed in any of claims 5 to 8, wherein the accompanying substances and assistants used are selected from the group consisting of monoethylene glycol, monopropylene glycol, glycerol, relatively long-chain mono- and dicarboxylic acids and their alkali metal salts, triazole derivatives, imidazole derivatives, silicates, nitrites, nitrates, phosphates, alkali metal hydroxides, thiazole derivatives, pyrrolidone derivatives, polyacrylates, alkaline earth metal salts, molybdates, tungstates, phosphonates and borates.

## Revendications

1. Utilisation de sels d'ammonium d'acides monocarboxyliques et dicarboxyliques en C₁-C₄ éventuellement substitués par OH, comme inhibiteurs de corrosion en espace vapeur dans des produits réfrigérants aqueux pour la phase de rodage de moteurs à combustion, dans lesquels le produit réfrigérant est, après que la phase de rodage a eu lieu, soutiré du circuit de refroidissement du moteur.

2. Utilisation suivant la revendication 1, **caractérisée en ce que** le sel de l'acide monocarboxylique ou dicarboxylique éventuellement substitué se trouve dans le produit réfrigérant en une quantité de ≤ 10% en poids, de préférence de 0,1 à 5% en poids, en particulier de 0,1 à 1% en poids.

3. Utilisation suivant l'une des revendications 1 et 2, **caractérisée en ce que** l'acide carboxylique est choisi parmi le groupe constitué de l'acide formique, de l'acide acétique, de l'acide propionique, de l'acide butyrique, de l'acide oxalique, de l'acide malonique, de l'acide succinique et de l'acide lactique.

4. Utilisation suivant l'une des revendications 1 à 3, **caractérisée en ce que** l'ion ammonium est choisi parmi le groupe constitué des ions NH₄⁺ et des ions monoalkylammonium, dialkylammonium et trialkylammonium présentant des radicaux alkyle en C₁-C₆ éventuellement substitués par OH, de préférence parmi le groupe constitué des ions NH₄⁺, monoéthylammonium, diéthylammonium et triéthylammonium et des ions monoéthanolammonium, diéthanolammonium et triéthanolammonium, en particulier des ions NH₄⁺ et triéthanolammonium.

5. Produit réfrigérant aqueux à propriétés d'inhibition de la corrosion en espace vapeur pour la phase de rodage de moteurs à combustion, après laquelle le produit réfrigérant est soutiré, contenant au moins un sel d'ammonium d'un acide monocarboxylique ou dicarboxylique en C₁-C₄, qui présente éventuellement un ou plusieurs substituants OH, à côté des substances auxiliaires et adjuvants courants.

6. Produit réfrigérant aqueux suivant la revendication 5, **caractérisé en ce que** le sel de l'acide monocarboxylique ou dicarboxylique éventuellement substitué se trouve dans le produit réfrigérant en une quantité de ≤ 10% en poids, de préférence de 0,1 à 5% en poids, en particulier de 0,1 à 1% en poids.

7. Produit réfrigérant aqueux suivant l'une des revendications 5 et 6, **caractérisé en ce que** l'acide carboxylique est choisi parmi le groupe constitué de l'acide formique, de l'acide acétique, de l'acide propionique, de l'acide butyrique, de l'acide oxalique, de l'acide malonique, de l'acide succinique et de l'acide lactique.

8. Produit réfrigérant aqueux suivant l'une des revendications 5 à 7, **caractérisé en ce que** l'ion ammonium est choisi parmi le groupe constitué des ions NH₄⁺ et des ions monoalkylammonium, dialkylammonium et trialkylammonium présentant des radicaux alkyle en C₁-C₆ éventuellement substitués par OH, de préférence parmi le groupe constitué des ions NH₄⁺, monoéthylammonium, diéthylammonium et triéthylammonium et des ions monoéthanolammonium, diéthanolammonium et triéthanolammoniun, en particulier des ions NH₄⁺ et triéthanolammonium.

9. Produit réfrigérant aqueux suivant l'une des revendications 5 à 8, **caractérisé en ce que** les adjuvants et substances auxiliaires utilisés sont choisis parmi le groupe qui est constitué du monoéthylèneglycol, du monopropylèneglycol, de la glycérine, des acides monocarboxyliques et dicarboxyliques à longue chaîne et de leurs sels de métal alcalin, des dérivés de triazole, des dérivés d'imidazole, des silicates, des nitrites, des nitrates, des phosphates, des hydroxydes de métal alcalin, des dérivés de thiazole, des dérivés de pyrrolidone, des polyacrylates, des sels de métaux alcalino-terreux, des molybdates, des tungstates, des phosphonates et des borates.
